# EUROPÄISCHE PATENTSCHRIFT

(11) **EP 1 444 905 B1**
(45) Veröffentlichungstag und Bekanntmachung des Hinweises auf die Patenterteilung: **17.03.2010**
(21) Anmeldenummer: 04001318.7
(22) Anmeldetag: 22.01.2004
(51) Int. Cl.: A24B 3/18

(54) **Druckkonditionierungsverfahren- und vorrichtung**
Pressure conditioning method and apparatus
Méthode et appareil pour conditionner la pression

(30) Priorität: 05.02.2003 DE 10304629
(43) Veröffentlichungstag der Anmeldung: 11.08.2004
(73) Patentinhaber: British American Tobacco (Germany) GmbH, 20354 Hamburg (DE)
(72) Erfinder: Ehling, Uwe Werner, 95497 Goldkronach (DE); Schmekel, Gerald, 25337 Elmshorn (DE); Plückhahn, Frank, 95445 Bayreuth (DE); Fuchs, Hans-Werner, 95349 Thurnau (DE); Link, Matthias Dr., 95445 Bayreuth (DE)
(74) Vertreter: Rögner, Jürgen

(56) Entgegenhaltungen:
- EP-A- 0 404 475
- DE-A1- 2 011 527
- DE-A1- 19 535 587
- DE-A1- 19 734 364

## Beschreibung

Die Erfindung betrifft ein kontinuierliches Verfahren zur Konditionierung von Nahrung- bzw. Genussmittelmaterial, bei dem das Material durch einen Eingang in eine unter überatmosphärischem Druck stehende Konditionierungskammer eingebracht, dort mit einem Konditionierungsmittel beaufschlagt und an einem Ausgang wieder aus der Konditionierungskammer ausgebracht wird. Im Weiteren wird dieses Verfahren kurz Druckkonditionierung genannt. Ferner betrifft sie eine Vorrichtung zur Druckkonditionierung von Nahrungs- bzw. Genussmittelmaterial.

Das Material, das erfindungsgemäß unter Druck konditioniert wird, kann einerseits ein Tabakmaterial, insbesondere Tabak-Rippenmaterial sein, andererseits ein körniges Nahrungsmittelgut, wie zum Beispiel Getreide und Hülsenfrüchte, also stärkehaltige Produkte, wie zum Beispiel Mais, Reis, Weizen, Erbsen und Sojabohnen.

Auf der Gebiet der Tabakverarbeitung existieren nach dem Stand der Technik einige Vorschläge zur Konditionierung von Tabakmaterialien, wie zum Beispiel Rippen oder Strips. Unter Konditionierung versteht man hier die notwendige verfahrenstechnische Behandlung von Tabakmaterialien vor dem Schneiden oder auch dem Schreddem. Der Konditionierungsprozess besteht im Wesentlichen aus einer wärmetechnischen Behandlung, der sogenannten Befeuchtung mit den Medien Dampf, Wasser und gegebenenfalls mit Casing-Medien. Der Prozess dient dazu, die Tabakmaterialien widerstandsfähiger gegenüber der unvermeidbaren Kleinteile- bzw. Staubbildung während des Zerkleinerungsprozesses zu machen. Bei hohen Eingangsfeuchten des Tabakmaterials kann Konditionierung auch eine Tabakabfeuchtung bedeuten.

Gemäß dem Standardverfahren nach dem Stand der Technik besteht die Aufbereitung von Rippen im Wesentlichen aus einer Auffeuchtung, begleitet von einer erwünschten Erwärmung. Warme Rippen begünstigen den Penetrationsprozess des Wassers in das Innere der Rippenstängel. Die Rohrippen werden dabei teilweise mehrstufig zur Auffeuchtung gebracht, wobei Dampf unter Zusatz von Wasser in dem entsprechenden Apparat versprüht wird. Ferner wird gemäß dem Stand der Technik auch eine Lagerung in Boxen durchgeführt. Die Lagerzeiten können hier bis zu 24 Stunden betragen. Damit ergibt sich nachteiligerweise ein großer Zeit- und Raumbedarf für die Boxen.

Der Erfolg einer Konditionierung ist gegeben, wenn die Rippe ein hohes Maß an Flexibilität besitzt und keine erkennbare Oberflächenfeuchte aufweist. Die Oberflächenfeuchte stört erheblich das Scheiden, da rutschige Rippenstücke sich einer ungestörten "Rippenkuchen-Bildung" im Schneidapparat entziehen und Hohlräume verursachen.

Weiterhin werden rutschige Rippen beim Schneiden durch die Schneidmesser leichter aus dem Rippenkuchen herausgerissen und somit unvollständig geschnitten. Diese unvollständig geschnittenen Rippen, die man Knockouts nennt, gilt es beim Schneiden zu vermeiden.

Insbesondere neigen Burley-Rippen zur Ausbildung von seifigen Oberflächen. Diesem Verhalten wird durch Einstellung von ausreichenden Lagerzeiten entgegengewirkt. Sehr oft wird vor dem Schneiden gewalzt; was einen verbesserten Packungsaufbau im Kuchen bewirkt.

Auch das Walzen wird durch rutschige Rippen-Oberflächen erheblich gestört.

Neben den einleitend beschriebenen Standard-Konditionierungsprozessen sind auch andere Konditionierungsmethoden für Tabakmaterialien bekannt. So zeigt die WO 99/23898 eine Anlage, die dazu dient, Tabakmaterial mit Casing-Medium zu beaufschlagen bzw. zu befeuchten, wobei der Apparat vertikal angeordnet ist, so dass das Tabakmaterial senkrecht von oben nach unten frei durch ein Rohr fällt, in dem es mit dem entsprechenden Medium besprüht wird. Weitere Konditionierungssysteme, bei denen das Tabakmaterial in freiem Fall durch eine Kammer mit dem Konditionierungsmedium beaufschlagt wird, sind aus der US 5,740,817, der WO 90/06695, der DE 197 34 364 A1 und der DE 100 38 114 A1 bekannt.

Das Problem, das bei den oben genannten Systemen auftritt, liegt darin, dass bei der relativ kurzen Verweilzeit des Tabakmaterials während des Herabfallens in der Konditionierungskammer eine einheitliche und tiefe Durchfeuchtung, wie sie zum Beispiel für Tabakrippen nötig ist, nicht optimal realisiert werden kann. Solche Apparate arbeiten zwar schnell, bereiten das Tabakmaterial aber nicht durchgängig so auf, wie dies wünschenswert wäre.

Aus der WO 87/07478 ist eine Vorrichtung zur Behandlung von Tabakmaterial bekannt, bei dem dieses in eine Kammer eingebracht wird und dort auf einem Förderband liegend vom Eingang zum Ausgang verbracht wird, während der Kammer Druckdampf zugeführt wird. Weil das Tabakmaterial aufgehäuft auf dem Förderband zu liegen kommt, werden weiter unten liegende Schichten nachteiligerweise schlechter befeuchtet als oben aufliegendes Tabakmaterial, was im Gesamtergebnis eine nicht vollständig befriedigende Konditionierung ergibt.

Für ein anderes, gattungsfremdes Gebiet der Tabakverarbeitung, nämlich für die Nitratabreicherung ist aus der DE 195 35 587 C2 eine Vorrichtung bekannt, bei der Tabak in ein schräg angeordnetes Gehäuse eingegeben wird, in welchem sich ein Wasserbad befindet. Im Gehäuse herrscht ein geringer Überdruck, und die Tabakrippen werden mittels einer Förderschnecke aus dem Wasserbad zum Ausgang des Gehäuses verbracht.

Die EP 0 404 475 A2 betrifft ein Verfahren und eine Vorrichtung für die Behandlung bzw. Verarbeitung von Material, derart wie Tabak. Das Verfahren und die Vorrichtung für die Behandlung bzw. Verarbeitung von Tabakmaterial und anderen biologischen Materialien enthält einen Mechanismus, der eine dynamische Dichtung aufweist, die Komponenten hat, die zusammenwirkende bewegliche Oberflächen zum Abdichten einer Behandlungs- bzw. Verarbeitungskammer haben, die im Wesentlichen den Durchgang von Fluid bei dem Behandlungs- bzw. Verarbeitungskammerdruck während der Bewegung der Komponenten zum Einführen von Material in die und Entfernen von Material aus der Kammer verhindern. Die Dichtungskomponenten weisen bevorzugt hochentwickelte Baukeramik-Komponenten auf, die eine Härte von wenigstens 900 kg/mm² und eine Ebenheit von wenigstens 70 Mikroinches (1,8 Mikrometer) haben. Das Verfahren wird bevorzugt bei überkritischen gasförmigen Bedingungen durchgeführt.

Es ist die Aufgabe der vorliegenden Erfindung, ein Druckkonditionierungsverfahren und eine Vorrichtung hierzu bereitzustellen, welche eine einstufige, einheitliche und gründliche Aufbereitung des zu verarbeitenden Materials gestatten, so dass das Material nach der Konditionierung in einem gewünschten Zustand vorliegt bzw. zur Weiterverarbeitung optimal geeignet ist. Dies soll in einem kontinuierlichen Verfahren geschehen, das ohne Lagerzeiten durchgeführt werden kann.

Diese Aufgabe wird erfindungsgemäß durch ein Verfahren gemäß dem anliegenden Patentanspruch 1 sowie eine Vorrichtung gemäß dem anliegenden Patentanspruch 14 und insbesondere durch die Merkmale in den kennzeichnenden Teilen dieser Ansprüche gelöst. Die Unteransprüche definieren bevorzugte Ausführungsformen der Erfindung.

Vorteilhaft wird das Material in einer schräg nach oben geneigten Konditionierungskammer mittels eines Mischförderers, insbesondere einer Förderschnecke kontinuierlich vom Eingang zum Ausgang gefördert. Dabei erfolgt eine sehr gute Durchmischung des Materials, einerseits durch die Umwälzung an den Flanken der Förderschnecke und andererseits durch die Schrägneigung der Konditionierungskammer, weil diese bewirkt, dass das Material durch den Einfluss der Schwerkraft immer wieder dazu neigt, etwas auf dem Förderweg zurückzufallen. Das Material kann hierdurch sehr einheitlich und durchgängig mit dem Konditionierungsmittel beaufschlagt werden, und eine solche Förderung lässt dem Konditionierungsmittel auch genügend Zeit, das Material bis in tief gelegene Abschnitte zu penetrieren. Das Verfahren wird dabei unter überatmosphärischen Druck durchgeführt, wodurch vorteilhafterweise das Konditioniermedium mit höheren Temperaturen als 100°C verwenden werden kann. Auf diese Weise ist es möglich das Tabakrippenmaterial ebenfalls höher zu erhitzen und dadurch auch bei geringerer Feuchte eine für den nachfolgenden Scheidprozess geeignete Elastizität zu erhalten.

Die Verweilzeit des Materials in der Kammer liegt vorteilhafterweise im Minutenbereich; sie kann zwischen etwa einer halben Minute und etwa zwölf Minuten liegen. Eine Anpassung der Verweilzeit auf den jeweiligen Anwendungsfall kann natürlich vorgenommen werden.

Vorteilhaft liegt der überatmosphärische Druck im Bereich von etwa 1 bar bis etwa 11 bar.

Wird ein überatmosphärischer Druck im Bereich von etwa 1 bar bis in etwa 1,5 bar ausgewählt, so ist insbesondere bei der Konditionierung von Tabakrippen schon eine sehr gute, durchgängige und einheitliche Durchfeuchtung erreichbar. In einem Bereich von 1,5 bar bis 4 bar findet eine solche optimale Konditionierung und zusätzlich eine Expansion der Tabak-Rippenmaterialien statt, während bei Druckbereichen von über etwa 4 bar eine Konditionierung, Expansion und eine Zerfaserung auftritt, welches alles gewünschte Effekte sind.

Vorteilhaft ist das Material ein zerkleinertes Tabakmaterial, insbesondere ein Tabak-Rippenmaterial. Vorteilhaft findet nach dem Konditionierungsprozess das Schneiden des entsprechend aufbereiteten Rippenmaterials im Produktionsablauf statt. Die Schneidfähigkeit von Rippen wird aber von der Temperatur, der Feuchte und der daraus resultierenden Elastizität der Rippen bestimmt. Eine vorteilhafte Konditionierung besteht dann, wenn die Rippen mit hohen Partikeltemperaturen und moderat angehobener Feuchte den Prozess verlassen. Hierzu gelangt man, wenn die Rippen in der Konditionierungskammer mittels der Förderschnecke gefördert und unter Druck, eingestellt durch die Zuführung von Sattdampf bzw. überhitztem Dampf, kontinuierlich konditioniert werden. Ein Beispiel:

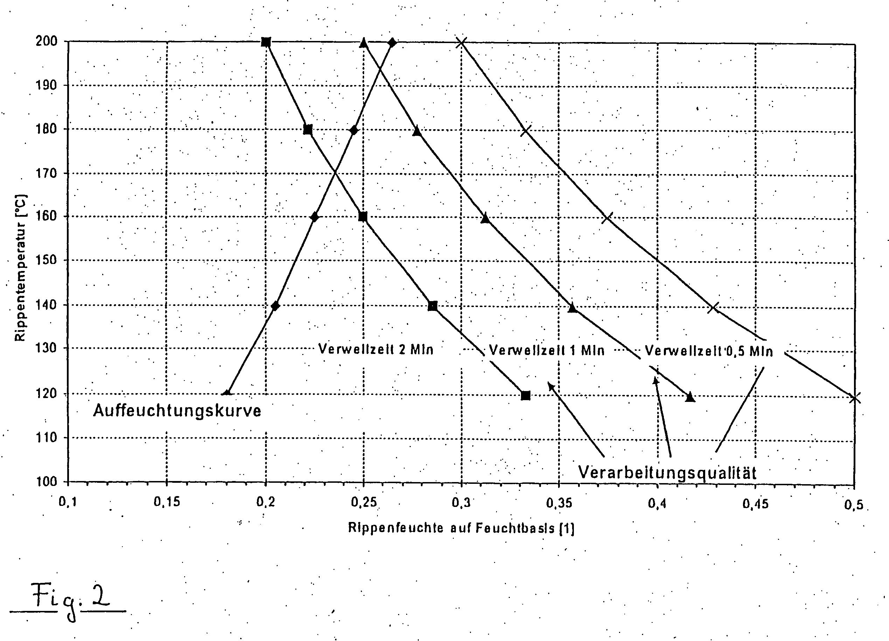

Ausgehend von einer Rohrippenfeuchte von ca. 7 bis 10 % verlassen die Rippen je nach Temperatur des Sattdampfes, korrespondierend mit dem Sattdampfdruck entsprechend der Dampfdruckkurve nach der anliegenden Figur 2 ("Auffeuchtungskurve"), den Prozess. Beispielsweise ergibt eine Behandlung von Rippen mit Sattdampftemperaturen von 140°C (ca. 3,6 bar) eine Auffeuchtung von ca. 20 % bezogen auf Feuchtbasis.

In Figur 2 sind drei weitere Kurven mit unterschiedlichen Verweilzeiten dargestellt. Diese Beziehungen geben sinngemäß die gleiche Verarbeitungsgüte mit unterschiedlichen Parametern, bestehend aus Verweilzeit, Tabaktemperatur und Tabakfeuchte wieder. Dabei wurde experimentell der Anfall von Staub und Knockouts sowie das erzielte Expansionsergebnis als Kriterium für die Ermittlung der Punkte gewählt. Aus der Lage zur Auffeuchtungskurve kann der Bedarf an zusätzlicher Wassereinspeisung ermittelt werden. Alle Kurvenpunkte links zur Auffeuchtungslinie bedürfen keiner Wasserzugabe. Bereiche rechts der Auffeuchtungskurve je nach horizontalem Abstand zwischen der Auffeuchtungskurve und der Verweilzeit bedürfen der Wasserzugabe. Zur Ermittlung des Wasserbedarfes ist die Anfangsfeuchte und Ausgangsfeuchte umzurechnen in Feuchte bezogen auf Trockenbasis. Die erhaltene Differenz ergibt den Wasserbedarf in Kilogramm pro Kilogramm Trockenmasse Rippe.

Vorteilhaft ist die Güte der Rippe bezüglich des Schneidens beim Punkt Verweilzeit 2 Min, 140°C Rippentemperatur und 28 % Rippenfeuchte gleichzusetzen mit einer Rippe mit Verweilzeit 1 Minute, Rippentemperatur 140°C und einer Rippenfeuchte von 36 %. Der Vorteil ist augenscheinlich, da Rippenfeuchte durch erhöhte Rippentemperatur ersetzt werden kann.

Durch das Verfahren ist das Lagern in Boxen zum Erreichen einer gleichmäßigen Penetration innerhalb der Rippen überflüssig geworden. Gleichwohl lässt sich die thermische Leistung des Trockners erheblich reduzieren, da die Rippen mit geringerer Feuchte geschnitten werden müssen, was zu Einsparungen an Energie und apparativem Aufwand führt.

Die Temperaturen von > 100°C lassen sich nur in druckbehafteten Verfahren realisieren.

Es kann je nach Art der Casing-Materialien vorteilhaft sein, das Soßieren in der Förderschneckenkammer vorzunehmen (whole stem casing), um einen zusätzliche Bearbeitungsschritt zu vermeiden.

Weiterhin ist es möglich, während der Behandlung Tabakreifungsprozesse zu induzieren und damit gezielte Geschmacksverbesserungen, mit oder ohne Casing-Zugabe zu erreichen.

Bei der Behandlung von Tabak-Rippenmaterial ist insbesondere die Wahl des Druckbereiches wichtig, und sie führt teilweise zu überraschend vorteilhaften Ergebnissen. Vorab sei hier angeführt, dass neben dem Schneiden des konditionierten Tabakmaterials grundsätzlich auch noch die Weiterverarbeitungsmöglichkeit des Schredderns bzw. Zerfaserns besteht. Im Gegensatz zum Schneiden wird beim Schreddern die Rippe durch zwei rotierende Scheiben zerfasert. Ein Vorteil hierbei besteht darin, dass zerfaserte Rippen die CO-Ausbeute im Rauch einer Zigarette im Vergleich zur geschnittenen Rippe absenken, jedoch hat das übliche Schredderverfahren Nachteile der erhöhten Staubbildung, so dass hohe Feuchtigkeitsbereiche oberhalb von 40 % eingestellt werden müssten. Trotz dieser hohen Feuchtigkeitsbereiche kann ein Materialverlust von ca. 20 % in Form von Staub nicht vermieden werden. Zerfaserte Rippen wären eigentlich vorteilhaft, jedoch sind sie herkömmlich nur dann erzielbar, wenn man eine hohe Staubbildung und hohe Kosten zur Trocknung vor der Weiterverarbeitung in Kauf nimmt.

Vorteilhaft kann das Tabakmaterial in Abhängigkeit des Arbeitsdruckes in der Konditionierungskammer aber sowohl konditioniert, expandiert und auch zerfasert werden. Dabei können die Druckbereiche wie folgt mit den Produkteigenschaften in der Tabelle 1 korreliert werden:

| **Tabelle 1** | | | |
|---|---|---|---|
| **Druckbereich** | | **Eigenschaften der Rippen** | **Bemerkungen** |
| A | > 1 bar bis 1,5 bar | konditioniert | Wertebereiche in Druck absolut |
| B | > 1,5 bar bis 4 bar | konditioniert und expandiert | |
| C | > 4bar | konditioniert, expandiert und zerfasert | |

Die Expansion der konditionierten Rippe im Druckbereich von 1,5 bar bis 4 bar zeigt sich im vergrößerten Durchmesser der Rippe nach der Behandlung und damit eine Erhöhung der Füllfähigkeit.

Im Druckbereich > 4 bar beginnt die Rippe den Prozess der Expansion mit thermischer Zerfaserung. Diese Zerfaserung zeigt sich beim Abtrennen einzelner Fasern, wobei ab ca. 6 bar die gesamte Rippe unabhängig von der Art vollständig zerfasert ist. Damit kann alternativ zur mechanischen Zerfaserung, dem Schreddern, ein Material hergestellt werden, welches eine vergleichbare Struktur aufweist, ohne den sonst in Kauf zu nehmenden Materialverlust von ca. 20 %.

Die Zerfaserung lässt sich mit dem plötzlichen Druckabbau erklären, der beim Austrag der konditionierten Rippen stattfindet.

Es ist von Vorteil, das Tabakmaterial bei der Konditionierung auf eine Feuchte von höchstens etwa 30 % zu bringen, wobei eine Feuchte von etwa 18 % bis etwa 30 % von Vorteil sein kann. Die Feuchte kann je nach den Einsatzbedingungen eingestellt werden.

Die Temperatur des Materials in der Konditionierungskammer liegt bevorzugt über 100°C, insbesondere zwischen 120°C bis 190°C.

Das Verfahren lässt sich auch dann einsetzen, wenn das Material ein körniges, expansionsfähiges Getreide- oder Hülsenfrüchtematerial ist, so dass durch ein sogenanntes "Puffen" ein solches Material stark im Volumen vergrößert wird. Dabei können die Getreide- oder Hülsenfrüchte einstufig und kontinuierlich mit einer Bearbeitungszeit im Bereich von Minuten so aufbereitet werden, dass beim Verlassen der Konditionierungskammer über eine Austragsschleuse durch die schlagartige Druckentlastung das Puffen ermöglicht wird.

Die Vorrichtung weist eine Konditionierungskammer auf, die schräg nach oben geneigt angeordnet ist und einen Mischförderer, insbesondere eine Förderschnecke umfasst, mittels der das Material kontinuierlich vom Eingang zum Ausgang gefördert wird. Die Vorteile der Vorrichtung beruhen darauf, dass mit ihr eine Druckkonditionierung umgesetzt werden kann, wie sie oben beschrieben wurde, und zwar mit den entsprechend vorteilhaften Ergebnissen.

Gemäß der Vorrichtung sind der Eingang und der Ausgang als differenzdruckfeste Zellradschleusen sowie die Konditionierungskammer als druckfeste Kammer ausgestaltet, wobei die Zellradschleusen und die Kammer bis zu einem Überdruck von mindestens 11 bar Differenz druckfest sind. Damit lassen sich die entsprechenden, schon oben beschriebenen Druckverhältnisse erzielen, welche vorteilhafterweise eine Konditionierung, Expansion und sogar eine Zerfaserung des verarbeiteten Materials ermöglichen.

Die Neigung der Konditionierungskammer ist bevorzugt verstellbar, insbesondere stufenlos verstellbar, und diese Verstellung erfordert speziell in einem Bereich von > 0° bis 45°. Ebenso kann die Drehzahl der Förderschnecke verstellbar ausgestaltet werden. Diese Verstellbarkeiten helfen dabei, die Verbleibzeit des Materials in der Konditionierungskammer einzustellen und zu optimieren. Eine weitere Optimierung ist durch die Verwendung einer Förderschnecke mit einer progressiven Steigung möglich.

Gemäß der Vorrichtung weisen die Flanken der Förderschnecke Aussparungen auf, durch welche das Material teilweise zurückfallen kann. Ein solches Zurückfallen des Materials ist in zweifacher Hinsicht von Vorteil. Einerseits wird damit die Durchmischung des Materials weiter verbessert, andererseits beugen die Aussparungen einem Steckenbleiben von Tabakmaterial zwischen Kammerinnenwand und Schneckenkante weitgehend vor, so dass hieraus resultierte Betriebsstörungen vermieden werden können.

Ein Tabakmaterial zur Verwendung in Rauchartikeln ist durch eines der vorstehend beschriebenen Verfahren oder mit einer der vorstehend beschriebenen Vorrichtungen hergestellt worden. Ein solches Tabakmaterial kann eines oder mehrere der folgenden Materialien umfassen:
- Tabakrippe;
- rekonstituierter Tabak, insbesondere Tabakfolie bzw. extrudierter Tabak;
- Winnowings;
- Tabakblatt bzw. Lamina-Tabak;
- Scrabs bzw. Tabak-Dreschabfälle, insbesondere in Größen von bis zu einigen cm²,
wobei die Materialien im Ganzen, grob zerkleinert oder auf Verwendungsgröße zugeschnitten vorliegen.

Die Materialien der obigen Aufzählung werden vorteilhafterweise in der Priorität ihrer Reihenfolge in der Liste verwendet, also bevorzugt Tabakrippe und dann mit absteigender Priorität die darauffolgenden Materialien. Die Herstellungsparameter für das Tabakmaterial entsprechen den hierin angegebenen Werten für Druck, Verweilzeit, Temperatur, Endfeuchte, optionales Casing während der Konditionierung etc.

Ein Tabakmaterial kann die oben genannten Materialien in den folgenden Anteilen aufweisen:
- Tabakrippe zu maximal 45%, insbesondere zu maximal 25%, speziell zu maximal 20%;
- Lamina-Tabak zu maximal 90%, insbesondere zu maximal 50%, speziell zu maximal 30;
- Rekonstituierter Tabak zu maximal 40%, insbesondere zu maximal 20%.

Ein Rauchartikel umfasst mindestens zum Teil Tabakmaterial oder Kombinationen von Tabakmaterial, wie es oben beschrieben worden ist. Er kann als Zigarette, Zigarillo oder als Roll-Produkt zur Selbstverfertigung ausgebildet sein. Natürlich kann das Tabakmaterial auch selbst als Rauchtabak verwendet werden, z.B. als Feinschnitttabak, Stopftabak, Pfeifentabak, etc.

Bei der Herstellung von Rauchartikeln oder eines Rauchtabaks ist es nicht unbedingt notwendig, lediglich Tabakmaterial zu verwenden. Es können auch Mischungen mit anderen Tabakmaterialien zum Einsatz kommen, z.B. nach dem Verfahren konditionierte und nicht nach dem Verfahren konditionierte Rippe, was natürlich nicht ausschließt, dass solche Rauchartikel oder Tabake auch lediglich aus Gemischen von Tabakmaterialien erzeugt werden, z.B. aus nach dem Verfahren konditionierter Rippe und nach dem Verfahren konditionierter Lamina im Blend.

Alle oben zitierten Merkmale können in jeglicher Kombination bei der Ausführung der Erfindung umgesetzt werden.

Die Erfindung wird im Weiteren anhand von Ausführungsbeispielen näher erläutert. In den Zeichnungen zeigen:
- Figur 1: eine schematische Darstellung einer erfindungsgemäßen Vorrichtung zur Druckkonditionierung von Tabak-Rippenmaterial; und
- Figur 2: die einleitend beschriebene Abbildung mit "Auffeuchtungskurven" für Tabakrippen.

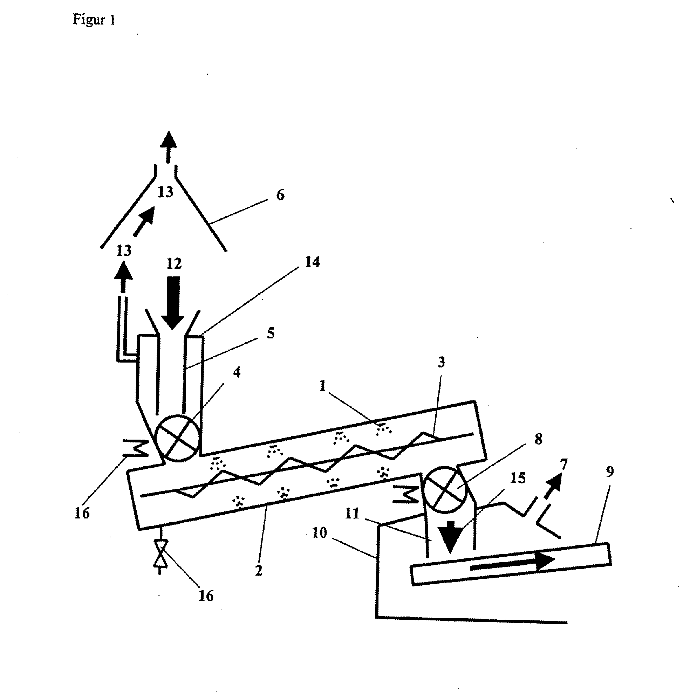

Gemäß der Darstellung der Figur 1 weist die erfindungsgemäße Tabakrippen-Konditionierungsvorrichtung einen druckfesten Schneckenförderer 2 auf, in den das Tabak-Rippenmaterial 12 über einen Eintragsschuh 14 einer differenzdruckfesten Zellradschleuse 4 eingebracht wird. Der Schneckenförderer 2 weist die ebenfalls nur schematisch dargestellte Förderschnecke 3 auf, deren Außenkante sich im tatsächlichen Praxisfall bis fast an die Innenwand des Gehäuses des Schneckenförderers 2 erstreckt. In den Schneckenförderer 2 werden über diverse Düsen 1, die über den Umfang und die Länge des Gehäuses des Schneckenförderers 2 verteilt sind, Dampf und je nach angestrebter Endfeuchte des Tabakmaterials auch Warmwasser eingedüst.

In speziell geeigneten Fällen kann auch schon ein Casing-Medium über die Düsen 1 zugeführt werden. Im Inneren des Schneckenförderers 2 stellen sich je nach Dampfkonditionen ein bestimmter Prozessdruck und eine bestimmte Prozesstemperatur ein. Bei der Verwendung von Sattdampf ergeben sich je nach gewähltem Prozessdruck, der zwischen 1 bis 11 bar betragen kann, die jeweiligen Prozesstemperaturen gemäß der Dampfdrucklinie zwischen 100 und 184°C. Mit überhitztem Dampf lassen sich Temperaturen oberhalb des entsprechenden Gleichgewichtsdrucks erzielen.

Von der Schnecke 3, die eine progressive Steigung in Richtung Ausgangszellradschleuse 8 besitzt, wird das Tabak-Rippenmaterial zur ebenfalls differenzdruckfesten Ausgangszellradschleuse 8 befördert und durch diese aus dem Schneckenförderer 2 ausgeschleust. Das Material, das nach dem Ausschleusen das Bezugszeichen 15 hat, wird dann über einen Austragsschuh 11 auf eine Fördereinrichtung 9 geleitet und verlässt schließlich die Leckdampfabsaughaube 10.

Die mittlere Verweilzeit des Tabakmaterials im Schneckenförderer 2 lässt sich über die Schneckendrehzahl und/oder über die verstellbare Neigung des Schneckenförderers 2 zwischen 30 Sekunden und zwölf Minuten einstellen. Die Steigung bzw. Neigung des Schneckenförderers nach oben kann stufenlos zwischen einem Winkel von > 0° und 45° eingestellt werden.

Durch das Schöpfvolumen der Zellradschleusen 4, 8 und durch den Spalt zwischen Zellradrotor und Zellradgehäuse ergibt sich zwangsläufig eine gewisse Leckdampfmenge, die über die Schleusen aus dem Schneckenförderer 2 entweicht und über Dampfabsaughauben 6 und 7 abgesaugt wird. Da der Leckdampf einen Energieverlust darstellt und die Zuführung des Tabak-Rippenmaterials in die Zellradkammern behindert, wird der Spalt zwischen Rotor und Gehäuse durch die Erzeugung einer entsprechenden Temperaturdifferenz zwischen diesen beiden Bauteilen minimiert und so die Leckdampfrate erheblich reduziert. Diese Temperierung des Zellradgehäuses ist mit dem Bezugszeichen 16 angedeutet; sie erfolgt zur Spalt- bzw. Leckdampfminimierung über einen Regelkreis. Nur auf diese Weise ist ein entsprechender Überdruckbereich in der Prozesskammer bei vertretbaren Leckdampfraten aufrechtzuerhalten. Auch die Konditionierungskammer bzw. ihre Bauteile (Schecke 3, Förderer 2) können beheizt werden, um Kondensation zu vermeiden.

Der in Figur 1 dargestellte Eintragsschuh 14 hat die Aufgabe den Hauptleckdampfstrom 13, der aus der Eintragsschleuse 4 entweicht, vom einfallenden Tabakmaterial fernzuhalten, um so die Befüllung der Zellradkammern zu gewährleisten. Der Hauptleckdampfstrom 13 wird deshalb seitlich an dem Tabakmaterial-Zuführungsschacht 5 vorbeigeleitet und verlässt den Eintragsschuh 14 über einen Rohrkrümmer in Richtung Absaughaube 6.

In weiterer möglicher Ausgestaltung ist der Schneckenförderer 2 über seine gesamte Länge mit diversen, in Figur 1 nicht dargestellten Waschdüsen ausgestattet. Das Waschwasser (warm oder kalt) kann nach dem Waschvorgang den Schneckenförderer 2 über den Kugelhahn 17 verlassen. Dieser Kugelhahn wird auch beim Anfahren der Anlage zum Entfernen des anfallenden Kondensates benutzt.

Weiterhin ist es möglich, am Gehäuse des Schneckenförderers 2 Reinigungsklappen vorzusehen, um den Innenraum des Förderers 2 bei einer Verstopfung mit Tabakmaterial zur Reinigung zugänglich zu machen. Es können beispielsweise drei (in Figur 1 nicht gezeigte) Reinigungsklappen über die Länge des Gerätes verteilt eingebaut werden (vorderes Drittel, Mitte und hinteres Drittel).

Ebenfalls ist es möglich, in den Flächen der Schnecke 3 Aussparungen vorzusehen, die ein Steckenbleiben des Tabakmaterials im Spalt und somit eine Antriebsblockierung weitgehend verhindern und außerdem ein Zurückfallen des Tabaks und eine hierdurch veranlasste, besser einheitliche Durchmischung bzw. Durchfeuchtung ermöglichen.

Durch die Verarbeitung des Tabakmaterials in der dargestellten Vorrichtung können je nach Betriebsdruck im Schneckenförderer sowie durch die Einstellung geeigneter Parameter für den Anlagenbetrieb und das Tabakmaterial die Tabakrippen konditioniert, konditioniert und expandiert und sogar konditioniert, expandiert und zerfasert werden, wie dies oben schon ausführlich beschrieben wurde. Im Folgenden werden die Resultate von Anwendungsversuchen mit einer erfindungsgemäßen Vorrichtung aufgeführt.

In der nachfolgenden Tabelle 2 wird das Ergebnis für sogenannte Long-Stems-Tabakrippen aufgezeigt, wobei die Proben 1 und 2 durch einen Standardprozess und die Proben 3 bis 5 durch einen erfindungsgemäßen Prozess verarbeitet wurden.

**Tabelle 2**

| **Probe** | **Beschreibung der Konditionierung** | **Bemerkung** |
|---|---|---|
| 1 | Konditionierung auf 35 % Feuchte plus Lagerung 5 h | Standard-Prozess |
| | Walzen, Schneiden mit 0,2 mm Schnittbreite | |
| | Zugabe von Casing mit Auffeuchtung auf 40% | Atmosphärische |
| | Expansion STS | Konditionierung |
| | Trocknung auf 14 % Feuchte | Admoist |
| | | |
| | | Vergleich |
| 2 | Konditionierung auf 43 % Feuchte plus Lagerung 5 h | Standard-Prozess |
| | Zerfaserung im Schredder, | |
| | Zugabe von Casing mit Auffeuchtung auf 45 % | Atmosphärische |
| | Trocknung auf 14 % Feuchte | Konditionierung |
| | | Admoist |
| | | |
| | | Vergleich |
| 3 | Konditionierung in der Schnecke auf 20 % | Erfindungsgemäße |
| | Verweilzeit zwei Minuten, Walzen | Probe |
| | Schneiden mit 0,2 mm Schnittbreite | |
| | Zugabe von Casing mit Auffeuchtung auf 25 % | Konditionierdruck 1,5 |
| | Expansion STS | bar Sattdampf |
| | Trocknung auf 14 % Feuchte | |
| | | Druckbereich A |
| | | gemäß Tabelle 1 |
| 4 | Konditionierung in der Schnecke auf 21 % | Erfindungsgemäße |
| | Verweilzeit zwei Minuten, Walzen | Probe |
| | Schneiden mit 0,2 mm Schnittbreite | |
| | Zugabe von Casing mit Auffeuchtung auf 25 % | Konditionierdruck 4 bar |
| | Expansion STS | Sattdampf |
| | Trocknung auf 14 % Feuchte | |
| | | Druckbereich B |
| | | gemäß Tabelle 1 |
| 5 | Konditionierung in der Schnecke auf 22 % | Erfindungsgemäße |
| | Verweilzeit zwei Minuten, | Probe |
| | Schneiden mit 0,2 mm Schnittbreite | |
| | Zugabe von Casing mit Auffeuchtung auf 25 % | Konditionierdruck 6 bar |
| | Expansion STS | Sattdampf |
| | Trocknung auf 14 % Feuchte | |
| | | Druckbereich C |
| | | (zerfasert) |
| | | gemäß Tabelle 1 |

Die Tabelle 3 zeigt die Füllfähigkeiten der fünf Rippenproben aus Tabelle 2 auf:

| **Tabelle 3** | | |
|---|---|---|
| **Probe** | **Ergebnisse** | **Bemerkungen** |
| 1 | Füllfähigkeit: 5,4 ml/g auf 12 % Feuchte korrigiert | Vergleich geschnitten |
| 2 | Füllfähigkeit: 5,6 ml/g auf 12 % Feuchte korrigiert | Vergleich mechanisch zerfasert |
| 3 | Füllfähigkeit: 5,7 ml/g auf 12 % Feuchte korrigiert | |
| 4 | Füllfähigkeit: 6,7 ml/g auf 12 % Feuchte korrigiert | |
| 5 | Füllfähigkeit: 7,2 ml/g auf 12 % Feuchte korrigiert | thermisch zerfasert |

Es ist also mit der erfindungsgemäßen Druckkonditionierung gelungen, Rippen mit einer Konditionierzeit von nur zwei Minuten und einer Endfeuchte von 25 % zu schneiden und dennoch eine verbesserte Füllfähigkeit zu erlangen.

Im Folgenden wird in der Tabelle 4 noch ein Anwendungsbeispiel für Getreide bzw. Hülsenfrüchte aufgeführt. Es wurden stellvertretend für diese Gruppe die stärkehaltigen Produkte Reis, Mais, Weizen, Erbsen, wie in Tabelle 4 gezeigt, verarbeitet:

| **Tabelle 4** | | |
|---|---|---|
| **Probe** | **Verfahrensablauf** | **Bemerkung** |
| Mais | Konditionierdruck 7 bar, | alle Produkte wurden im Volumen stark vergrößert und entsprechend dem bekannten Bild von Popcorn, Puffreis usw. |
| | Verweilzeit fünf Minuten | |
| Reis | Konditionierdruck 8 bar, | |
| | Verweilzeit vier Minuten | |
| Weizen | Konditionierdruck 9 bar, | |
| | Verweilzeit fünf Minuten | |
| Erbsen | Konditionierdruck 10 bar, | |
| | Verweilzeit sechs Minuten | |

Es gelingt also auch bei körnigem, stärkehaltigem Nahrungsmittelmaterial stark volumenvergrößerte Produkte herzustellen, wobei das erfindungsgemäße Verfahren den Vorteil der kontinuierlichen Verfahrensweise besitzt.

## Patentansprüche

1. Verfahren zur Druckkonditionierung von Tabak-Rippenmaterial, bei dem das Material (12) durch einen Eingang (4) in eine unter überatmosphärischem Druck stehende Konditionierungskammer (2) eingebracht, dort mittels Zuführungsdüsen (1) mit einem Konditionierungsmittel beaufschlagt und an einem Ausgang (8) wieder aus der Konditionierungskammer (2) ausgebracht wird, wobei das Material (12) in einer schräg nach oben geneigten Konditionerungskammer (2) mittels eines Mischförderers (3) kontinuierlich vom Eingang (4) zum Ausgang (8) gefördert wird, **gekennzeichnet durch** das Ausbilden der Zuführungsdüsen (1) als Dampf- und/oder Wasser-Zuführungsdüsen, sodass die Feuchte des Tabak-Rippenmaterials **durch** Zuführung von Dampf und/oder Wasser auf die angestrebte Endfeuchte eingestellt wird, und **durch** das Ausgestalten des Eingangs (4) und des Ausgangs (8) als differenzdruckfeste Zellradschleusen, sowie der Konditionerungskammer (2) als druckfeste Kammer, wobei die Zellradschleusen und die Kammer bis zu einem Überdruck von 11 bar druckfest sind.

2. Verfahren nach Anspruch 1, bei dem die längste Verweilzeit des Materials (12) in der Konditionerungskammer (2) im Minutenbereich liegt.

3. Verfahren nach Anspruch 2, mit einer Verweilzeit im Bereich von etwa einer halben Minute bis etwa zwölf Minuten.

4. Verfahren nach einem der Ansprüche 1 bis 3, bei dem der überatmosphärische Druck im Bereich von etwa 1 bar bis etwa 11 bar liegt.

5. Verfahren nach einem der Ansprüche 1 bis 3, bei dem der überatmosphärische Druck im Bereich von etwa 1 bar bis etwa 1,5 bar liegt.

6. Verfahren nach einem der Ansprüche 1 bis 3, bei dem der überatmosphärische Druck im Bereich von etwa 1,5 bar bis etwa 4 bar liegt.

7. Verfahren nach einem der Ansprüche 1 bis 3, bei dem der überatmosphärische Druck im Bereich von über etwa 4 bar liegt.

8. Verfahren nach einem der Ansprüche 1 bis 7, bei dem bei der Druckkonditionierung eine Abfeuchtung bzw. Trocknung stattfindet.

9. Verfahren nach Anspruch 8, bei dem die Abfeuchtung bzw. Trocknung mit überhitztem Dampf erfolgt.

10. Verfahren nach einem der Ansprüche 8 oder 9, bei dem das Material (12) bei der Konditionierung auf eine Feuchte von höchstens etwa 30 % gebracht wird.

11. Verfahren nach einem der Ansprüche 8 oder 9, bei dem das Material (12) bei der Konditionierung auf eine Feuchte von etwa 18 % bis etwa 30 % gebracht wird.

12. Verfahren nach einem der Ansprüche 8 bis 11, bei dem die Temperatur des Materials (12) in der Konditionierungskammer (2) über 100°C, insbesondere zwischen 120°C und 190°C liegt.

13. Verfahren nach einem der Ansprüche 8 bis 12, bei dem das Material (12) bei der Konditionierung mit bzw. zusätzlich mit einem Casing-Material beaufschlagt wird.

14. Vorrichtung zur Druckkonditionierung von Tabak-Rippenmaterial, mit einer unter überatmosphärischem Druck stehenden Konditionierungskammer (2), in die das Material (12) durch einen Eingang (4) eingebracht wird, mit Zuführungsdüsen (1) zur Beaufschlagung des Materials (12) mit einem Konditionierungsmittel, und mit einem Ausgang (8) zur Ausbringung des Materials (12) aus der Konditionierungskammer (2), wobei die Konditionierungskammer (2) schräg nach oben geneigt angeordnet ist und einen Mischförderer (3) umfasst, mittels der das Material (12) kontinuierlich vom Eingang (4) zum Ausgang (8) gefördert wird, **dadurch gekennzeichnet, dass** die Zuführungsdüsen (1) als Dampf- und/oder Wasser-Zuführungsdüsen ausgebildet sind, sodass die Feuchte des Tabak-Rippenmaterials durch Zuführung von Dampf und/oder Wasser auf die angestrebte Endfeuchte einstellbar ist, und dass der Eingang (4) und der Ausgang (8) als differenzdruckfeste Zellradschleusen, sowie die Konditionierungskammer (2) als druckfeste Kammer ausgestaltet sind, wobei die Zellradschleusen und die Kammer bis zu einem Überdruck von 11 bar druckfest sind.

15. Vorrichtung nach Anspruch 14, **dadurch gekennzeichnet, dass** der Mischförderer eine Förderschnecke umfasst.

16. Vorrichtung nach Anspruch 14 oder 15, **dadurch gekennzeichnet, dass** die Neigung der Konditionierungskammer (2) verstellbar ist, insbesondere im Bereich von > 0° bis 45°.

17. Vorrichtung nach einem der Ansprüche 14 bis 16, **dadurch gekennzeichnet, dass** die Förderschnecke (3) eine progressive Steigung aufweist.

18. Vorrichtung nach einem der Ansprüche 14 bis 17, **dadurch gekennzeichnet, dass** die Drehzahl der Förderschnecke (3) verstellbar ist.

19. Vorrichtung nach einem der Ansprüche 14 bis 18, **dadurch gekennzeichnet, dass** die Flanken der Förderschnecke (3) Aussparungen aufweisen, durch welche das Material (12) zurückfallen kann.

## Claims

1. A method for pressure-conditioning tobacco stem material, wherein the material (12) is introduced through an entrance (4) into a hyperbarically pressurised conditioning chamber (2), where it is treated with a conditioning agent by means of supply nozzles (1), and extracted again from the conditioning chamber (2) at an exit (8), wherein the material (12) is conveyed continuously from the entrance (4) to the exit (8) in a conditioning chamber (2) inclined obliquely upwards, by means of a mixing conveyor (3), **characterised by** forming the supply nozzles (1) as steam and/or water supply nozzles, such that the moistness of the tobacco stem material is set to the desired end moistness by supplying steam and/or water, and by configuring the entrance (4) and the exit (8) as pressure differential proof cellular wheel sluices, and configuring the conditioning chamber (2) as a pressure proof chamber, wherein the cellular wheel sluices and the chamber are pressure proof up to a pressure burden of 11 bars.

2. The method according to claim 1, wherein the longest dwelling time of the material (12) in the conditioning chamber (2) is in the range of a few minutes.

3. The method according to claim 2, with a dwelling time in the range of about half a minute to about twelve minutes.

4. The method according to any one of claims 1 to 3, wherein the hyperbaric pressure is in the range of about 1 bar to about 11 bars.

5. The method according to any one of claims 1 to 3, wherein the hyperbaric pressure is in the range of about 1 bar to about 1.5 bars.

6. The method according to any one of claims 1 to 3, wherein the hyperbaric pressure is in the range of about 1.5 bars to about 4 bars.

7. The method according to any one of claims 1 to 3, wherein the hyperbaric pressure is in the range of above about 4 bars.

8. The method according to any one of claims 1 to 7, wherein pressure-conditioning includes de-moistening and/or drying.

9. The method according to claim 8, wherein de-moistening and/or drying is performed using superheated steam.

10. The method according to any one of claims 8 or 9, wherein the material (12) is given a moistness of about 30% at most during conditioning.

11. The method according to any one of claims 8 or 9, wherein the material (12) is given a moistness of about 18% to about 30% during conditioning.

12. The method according to any one of claims 8 to 11, wherein the temperature of the material (12) in the conditioning chamber (2) is above 100°C, in particular between 120°C and 190°C.

13. The method according to any one of claims 8 to 12, wherein the material (12) is treated with or additionally with casing material during conditioning.

14. A device for pressure-conditioning tobacco stem material, comprising: a hyperbarically pressurised conditioning chamber (2), into which the material (12) is introduced through an entrance (4); supply nozzles (1) for treating the material (12) with a conditioning agent; and an exit (8) for extracting the material (12) from the conditioning chamber (2), wherein the conditioning chamber (2) is arranged obliquely inclined upwards and comprises a mixing conveyor (3) by means of which the material (12) is conveyed continuously from the entrance (4) to the exit (8), **characterised in that** the supply nozzles (1) are formed as steam and/or water supply nozzles, such that the moistness of the tobacco stem material can be set to the desired end moistness by supplying steam and/or water, and **in that** the entrance (4) and the exit (8) are configured as pressure differential proof cellular wheel sluices, and the conditioning chamber (2) is configured as a pressure proof chamber, wherein the cellular wheel sluices and the chamber are pressure proof up to a pressure burden of 11 bars.

15. The device according to claim 14, **characterised in that** the mixing conveyor comprises a conveying screw.

16. The device according to claim 14 or 15, **characterised in that** the inclination of the conditioning chamber (2) is variable, in particular in the range >0° to 45°.

17. The device according to any one of claims 14 to 16, **characterised in that** the conveying screw (3) exhibits a progressive pitch.

18. The device according to any one of claims 14 to 17, **characterised in that** the speed of the conveying screw (3) is variable.

19. The device according to any one of claims 14 to 18, **characterised in that** the flanks of the conveying screw (3) comprise cavities through which the material (12) can fall back.

## Revendications

1. Procédé de conditionnement sous pression de matière de côte de tabac, dans lequel la matière (12) est introduite par une entrée (4) dans une chambre de conditionnement mise sous pression hyperbare (2), où elle est traitée avec un agent de conditionnement au moyen de buses d'alimentation (1), et est de nouveau extraite de la chambre de conditionnement (2) à une sortie (8), dans lequel la matière (12) est acheminée de manière continue de l'entrée (4) à la sortie (8) dans une chambre de conditionnement (2) inclinée en oblique vers le haut au moyen d'un convoyeur de mélange (3), **caractérisé en ce** les buses d'alimentation (1) sont configurées comme des buses d'alimentation en vapeur et/ou en eau, de telle sorte que l'humidité de la matière de côte de tabac est réglée à l'humidité finale ciblée en introduisant de la vapeur et/ou de l'eau, et l'entrée (4) et la sortie (8) sont conçues comme des écluses à roue cellulaire résistantes à la pression différentielle, et la chambre de conditionnement (2) est conçue comme une chambre résistante à la pression, les écluses à roue cellulaire et la chambre étant résistantes à la pression jusqu'à une surpression de 11 bar.

2. Procédé selon la revendication 1, dans lequel le plus long temps de séjour de la matière (12) dans la chambre de conditionnement (2) est dans la plage de quelques minutes.

3. Procédé selon la revendication 2, avec un temps de séjour dans la plage d'environ une demie minute jusqu'à environ douze minutes.

4. Procédé selon l'une quelconque des revendications 1 à 3, dans lequel la pression hyperbare est dans la plage d'environ 1 bar à environ 11 bar.

5. Procédé selon l'une quelconque des revendications 1 à 3, dans lequel la pression hyperbare est dans la plage d'environ 1 bar à environ 1,5 bar.

6. Procédé selon l'une quelconque des revendications 1 à 3, dans lequel la pression hyperbare est dans la plage d'environ 1,5 bar à environ 4 bar.

7. Procédé selon l'une quelconque des revendications 1 à 3, dans lequel la pression hyperbare est dans la plage de plus d'environ 4 bar.

8. Procédé selon l'une quelconque des revendications 1 à 7, dans lequel une humidification ou un séchage a lieu lors du conditionnement sous pression.

9. Procédé selon la revendication 8, dans lequel l'humidification ou le séchage a lieu avec de la vapeur surchauffée.

10. Procédé selon l'une quelconque des revendications 8 ou 9, dans lequel la matière (12) est amenée à une humidité d'environ 30 % au plus lors du conditionnement.

11. Procédé selon l'une quelconque des revendications 8 ou 9, dans lequel la matière (12) est amenée à une humidité d'environ 18 % jusqu'à environ 30 % lors du conditionnement.

12. Procédé selon l'une quelconque des revendications 8 à 11, dans lequel la température de la matière (12) dans la chambre de conditionnement (2) est supérieure à 100 °C, en particulier entre 120 °C et 190 °C.

13. Procédé selon l'une quelconque des revendications 8 à 12, dans lequel la matière (12) est traitée avec ou en plus avec une matière de sauçage lors du conditionnement.

14. Dispositif de conditionnement sous pression d'une matière de côte de tabac, comportant une chambre de conditionnement mise sous pression hyperbare (2) dans laquelle la matière (12) est introduite par une entrée (4), des buses d'alimentation (1) pour le traitement de la matière (12) avec un agent de conditionnement, et une sortie (8) pour extraire la matière (12) de la chambre de conditionnement (2), dans lequel la chambre de conditionnement (2) est agencée inclinée en oblique vers le haut et inclut un convoyeur de mélange (3) au moyen duquel la matière (12) est acheminée de manière continue de l'entrée (4) à la sortie (8), **caractérisé en ce que** les buses d'alimentation (1) sont conçues sous forme de buses d'alimentation en vapeur et/ou en eau, de telle sorte que l'humidité de la matière de côte de tabac peut être réglée à l'humidité finale ciblée en introduisant de la vapeur et/ou de l'eau, et que l'entrée (4) et la sortie (8) sont conçues comme des écluses à roue cellulaire résistantes à la pression différentielle, et la chambre de conditionnement (2) est conçue comme une chambre résistante à la pression, les écluses à roue cellulaire et la chambre étant résistantes à la pression jusqu'à une surpression de 11 bar.

15. Dispositif selon la revendication 14, **caractérisé en ce que** le convoyeur de mélange inclut une vis transporteuse.

16. Dispositif selon la revendication 14 ou 15, **caractérisé en ce que** l'inclinaison de la chambre de conditionnement (2) est réglable, en particulier dans la plage de > 0 ° jusqu'à 45 **°.**

17. Dispositif selon l'une quelconque des revendications 14 à 16, **caractérisé en ce que** la vis transporteuse (3) présente un pas progressif.

18. Dispositif selon l'une quelconque des revendications 14 à 17, **caractérisé en ce que** la vitesse de rotation de la vis transporteuse (3) est réglable.

19. Dispositif selon l'une quelconque des revendications 14 à 18, **caractérisé en ce que** les flancs de la vis transporteuse (3) comportent des cavités à travers lesquelles la matière (12) peut retomber.
